# EUROPÄISCHE PATENTANMELDUNG

(11) **EP 0 847 783 A2**
(43) Veröffentlichungstag der Anmeldung: **17.06.1998**
(21) Anmeldenummer: 97122024.9
(22) Anmeldetag: 15.12.1997
(51) Int. Cl.: B01D 3/10

(54) **Verfahren zur schonenden Trennung von Fluiden und Abtrennung von Inhaltsstoffen aus Fluiden zum Zwecke der Gewinnung zweier oder mehrerer Fraktionen mittels eines thermischen Trennverfahrens**

(30) Priorität: 14.12.1996 DE 19652150
(71) Anmelder: Institut für Umwelttechnologie und Umweltanalytik e.V. (IUTA), 47229 Duisburg (DE)
(72) Erfinder: Schöppe, Günter, 40668 Meerbusch (DE); Schöppe, Angelika, 40668 Meerbusch (DE); Erich, Egon, 47475 Kamp-Lintfort (DE); Schmidt, Klaus Gerhard, 47906 Kempen (DE); Bartsch, Robert, 47906 Kempen (DE); Sichler, Martin, 87544 Blaichbach (DE)
(74) Vertreter: Cohausz & Florack

(57) **Zusammenfassung**

Es wird ein Verfahren zur schonenden Auftrennung von fluiden Systemen und zur Abtrennung von Inhaltsstoffen aus Fluiden zum Zwecke der Gewinnung zweier oder mehrerer Fraktionen mittels eines thermischen Trennverfahrens vorgeschlagen, welches produktschonend durch Anlegen eines Vakuums erfolgt, und wobei ein durch Vakuum beaufschlagbares Volumen zur Durchführung der Destillation/Rektifikation nur teilweise mit Fluid gefüllt wird und die Möglichkeit einer integrierten Sterilisation bietet.

## Beschreibung

Die Erfindung betrifft ein Verfahren zur schonenden Trennung von fluiden Systemen und Abtrennung von Inhaltsstoffen aus Fluiden zum Zwecke der Gewinnung zweier oder mehrerer Fraktionen mittels eines thermischen Trennverfahrens auf der Basis einer Kombination von Vakuum-Destillation und Rektifikation mit der Möglichkeit einer integrierten Sterilisation.

Fluide im Sinne der Erfindung umfassen fluide Systeme, also Lösungen, Gemische, Suspensionen, Emulsionen oder generell kolloiddisperse Systeme usw. Die Auftrennung der gleichen Systeme und die Abtrennung von Inhaltsstoffen kann beispielsweise dem Zweck dienen, Dispersionsmittel unter simultaner Gewinnung angereicherter und/oder reiner Produktphasen zu gewinnen. Die Anwendungen sind für anorganische, organische oder auch biologische/biotechnologische Systeme denkbar.

Wenngleich Destillationsverfahren grundsätzlich zum Stand der Technik gehören, ermöglicht die herkömmliche Durchführung einer Destillation lediglich die Verdampfung einer Flüssigkeit und ihre anschließende Kondensation, ohne daß eine vollständige Gemischtrennung bewerkstelligt werden kann. Exakte Auftrennungen machen eine Rektifikation im Kolonnenverfahren erforderlich. Für hochsiedene Substanzen ist es auch bekannt, Destillationsverfahren bei Unterdruck durchzuführen.

Wenngleich derartige Verfahren überall da eingesetzt werden können, wo es darum geht, Wasser, Öl oder Kohlenwasserstoffgemische, biologische Produkte oder dergleichen möglichst produktschonend und möglichst rein aus einem fluiden System zu gewinnen, ergeben sich vor allem im Bereich der Lebensmitteltechnologie, so z.B. in der Milchwirtschaft, bei Anwendung einer angepaßten neuartigen Vakuumdestillation bisher nicht zugängliche Anwendungsfelder zur Gewinnung neuer Produkte und zur Produktbehandlung.

Der Erfindung liegt die **Aufgabe** zugrunde, ein Verfahren zur schonenden Trennung von fluiden Systemen und zur Abtrennung von Inhaltsstoffen aus Fluiden bereitzustellen, welches zu neuen Produkten aus bekannten Ausgangsmaterialien führt und darüberhinaus produktschonend und streng kontinuierlich auf eine wirtschaftliche Arbeitsweise ausgelegt ist.

Zur technischen **Lösung** dieser Aufgabe wird ein thermisches Trennverfahren vorgeschlagen, welches unter Anlegen eines Vakuums erfolgt, wobei das zur Durchführung der Destillation durch Vakuum beaufschlagte Volumen nur teilweise mit Fluid gefüllt wird.

Das angegebene erfindungsgemäße Verfahren sieht praktisch vor, daß der während des Destillationsprozesses entstehende Dampf in einem verbleibenden Volumen innerhalb der Vakuumkammer einem rektifikationsähnlichen Verfahren unterworfen wird. Durch diese Anordnung ergibt sich ein quasi-einstufiges Niedertemperatur-/Niederdruck-Destillations-/Rektifikationsverfahren. Die hierfür benötigten Vorrichtungen und Energien sind mit geringem wirtschaftlichen Aufwand bereitstellbar. Im Ergebnis ist es möglich, je nach Anforderung ein Produkt mit hohem Reinheitsgrad abzutrennen, wobei eine zweite oder dritte Produktklasse zu sehr hoher Reinheit angereichert werden kann. In einem Folgeschritt kann insbesondere durch Änderung des Vakuums und/oder der Temperatur, die zweite oder dritte oder folgende Produktklasse ebenfalls mit sehr hoher Reinheit vom Eduktrest abgetrennt werden.

Mit dem erfindungsgemäßen Verfahren lassen sich leicht Wasser, Kohlenwasserstoffe und dergleichen aus fluiden Systemen abtrennen, so daß ein entsprechender Eduktrest verbleibt.

Ein weiterer besonderer Vorteil des Verfahrens liegt in der leichten Anpassungsfähigkeit auf die jeweiligen Produkt- und Fluid-Erfordernisse.

Mit besonderem Vorteil wird vorgeschlagen, daß je nach Trennaufgabe das Vakuum variierbar ist. Dies erfolgt durch unterschiedlichste Maßnahmen, beispielsweise Nachheizen, Verstärken oder Schwächen des Vakuums und/oder der Volumenströme durch Abkühlen und dergleichen.

Mit besonderem Vorteil zeichnet sich das erfindungsgemäße Verfahren dadurch aus, daß die Produktströme kontinuierlich abgenommen werden können. Realisiert wird das durch einen internen Kreislauf, der je nach Anforderung druckseitig anpassungsfähig ist. Daneben sorgt eine neuartige mechanisch funktionierende Vorrichtung für die Destabilisierung/Zerstörung evtl. auftretenden Schaumes.

Mit besonderem Vorteil wird vorgeschlagen, daß die Vakuum-Destillation und Rektifikation auch mit einer integrierten Sterilisationseinheit ausgeführt wird, die die Funktion hat, die abgetrennten Produkte zu sterilisieren, z.B. durch eine UV-Strahlungsbehandlung.

Das erfindungsgemäße Verfahren läßt sich besonders gut auf wäßrige Systeme anwenden. Es läßt sich wegen der guten Steuerbarkeit bis zum Erhalt eines fließfähigen Konzentrates, in der Regel ca. 10 % der Eduktmenge durchführen, beispielsweise mit einem Restwassergehalt von ca. 50 %. Bezogen auf wäßrige Systeme wie beispielsweise Magermilch, Molke, die ca. 90 % bzw. 95 % aus Wasser bestehen, können somit bis zu 80 % bzw. 90 % der ursprünglichen Menge als Wasser gewonnen werden. Dieses Wasser hat zumindest Brauchwasserqualität und kann durch einfache Nachbehandlungen auch Trinkwasserqualität erreichen.

Mit besonderem Vorteil läßt sich das erfindungsgemäße Verfahren im Bereich der Lebensmitteltechnologie anwenden, besonders vorteilhaft auf Milch und Milchfolgeprodukte. Ganz besonders geeignet ist das Verfahren auch zum Einsatz in der Käseherstellung dergestalt, daß das schonend gewonnene Molkekonzentrat wieder einem Käsereiprozeß zugeführt wird.

Alternativ läßt sich das Verfahren auch sehr gut auf biologische Systeme anwenden, beispielsweise, um in gegenüber heutigen Verfahren äußerst produktschonender und wirtschaftlich effektiver Weise Biomassen aufzukonzentrieren.

Darüber hinaus ergeben sich vorteilhafte Anwendungsbereiche in jeder Art von Laboranwendung, beispielsweise die oben bereits genannte Aufkonzentration von Biomassen, aber auch in der chemischen, biologischen und pharmazeutischen Analysentechnologie. Als Beispiel sei die schonende und analysenkonforme Einengung von wäßrigen Proben erwähnt.

Das erfindungsgemäße Verfahren ist mit geringem Energieaufwand höchst wirtschaftlich und effektiv unter Verwendung von quasi-einstufigen Niedertemperatur-/Niederdruck-Destillations-/Rektifikationsanlagen mit einem Leistungsvermögen von 40 bis 500 l/h.

Zur Erläuterung des Verfahrens werden dessen Vorteile anhand der Möglichkeiten im Bereich der Milchverarbeitung im folgenden erläutert. Dabei ergeben sich weitere Vorteile und Merkmale der Erfindung.

Bekanntermaßen besteht Milch überwiegend aus Wasser. Soweit Milch nicht als unverarbeitetes Getränk verwendet wird, konzentriert sich das Interesse auf die übrigen Inhaltsstoffe, die als Nahrungsmittel oder Rohstoffe für sonstige Produktionen Verwendung finden, also auf Fett, Eiweiß, Milchzucker usw. Standardgemäß werden diese Inhaltsstoffe traditionell durch Entrahmen, durch Säuerungs- und Fermentationsprozesse und dergleichen mehr gewonnen. Entrahmen erfolgt z.B. unter Verwendung von Zentrifugen oder auch biochemisch durch Säuerung zur Gewinnung von z.B. Joghurt, Weißkäse usw.

Nach all diesen Verarbeitungsschritten bleiben wäßrige Systeme mit geringem Produktgehalt übrig wie Magermilch, Sauermilch, Buttermilch und Molke, die nur teilweise weiterverwendet, in der Regel aber der Tierfütterung zugeführt werden. Diese Verfahren werden großindustriell eingesetzt.

Im Bereich der Milchwirtschaft besteht vor allem wirtschaftlicher Bedarf an kleineren bzw. mittelgroßen Lösungen.

Destillationsprozesse führen zur Flüssigkeitsverdampfung. Es ist belegt, daß beim Eindampfen von Milch, Magermilch und Molke unter Anwendung des erfindungsgemäßen Verfahrens das überdestillierte Wasser zumindest Brauchwasserqualität erreicht. Durch die Nachreinigung des wäßrigen Destillats z. B., wie aus der Wassertechnologie bekannt, mit Adsorptionsmitteln, erhält man Wasser in Trinkwasserqualität.

Unter Verwendung des erfindungsgemäßen Verfahrens erfolgt die Verdampfung bei Temperaturen kleiner 100°C, so daß auch temperaturempfindliche Produkte bearbeitet werden können. Das verbleibende, fließfähige Konzentrat mit einem Restwassergehalt von ca. 50 % stellt eine Art Sirup dar, das man entweder zu Pulver trocknen oder zu neuen Produkten weiterverarbeiten oder als Rohstoff in neue Anwendungen führen kann.

So sind aus dem Stand der Technik Anwendungsbereiche bekannt, beispielsweise das Verkochen von Süßmolke unter ständigem Rühren zu einem pastösen Sirup als Brotaufstrich. Insbesondere in Skandinavien spricht man von der sogenannten Molkebutter oder dem Molkekäse. Auch hier erfolgt die Herstellung, unter Zugabe von Milch und/oder Sahne zur Molke, üblicherweise nur durch Eindampfen. Unter anderem werden dazu auch mehrstufige Vakuumeindampf- und unter Vakuum gehaltene Bräunungsanlagen verwendet.

Diese zum Teil sehr unwirtschaftlichen und aufwendigen Verfahren lassen sich mit dem erfindungsgemäßen Verfahren in einem quasi-einstufigen Niedertemperatur-/Niederdruck-Destillations-/Rektifikationsprozeß mit der Möglichkeit einer kontinuierlichen Produktabnahme vergleichsweise einfach und wirtschaftlich nachbilden, so daß die erhaltenen Produkte qualitativ hochwertige Rohstoffe darstellen, die zur Erzeugung neuer Produkte verwendet werden können. Darüber hinaus ist davon auszugehen, daß die bei niedriger Temperatur durchgeführte und damit sehr produktschonende Behandlungsmethode die Herstellung von völlig neuartigen Produkten ermöglicht, die mit den bisher angewandten Verfahren nicht erreichbar waren.

Völlig alternativ zur Milchwirtschaft ergeben sich auch weitere Vorteile und Merkmale der Erfindung im Hinblick auf die Niedrig-Temperatur-Konzentrierung von Biomasse. Einer der außerordentlich kostenrelevanten Schwachpunkte vieler biotechnologischer Prozesse ist die geringe Ausbeute. Üblicherweise handelt es sich auch hier um wäßrige Systeme mit einer Biomassekonzentration ≤ 10 %. Die äußerst schonende erfindungsgemäße Verfahrensweise verbessert die Biomassenaufkonzentration gegenüber bisher angewandten Verfahren erheblich und macht das Verfahren sehr viel wirtschaftlicher. Es ist anzunehmen, daß Biomasse-Konzentration und Zellaufschluß mit dem erfindungsgemäßen Verfahren in einem einzigen Arbeitsschritt durch kontinuierliche Vakuumerhöhung möglich ist.

Die Erfindung ermöglicht auf wirtschaftliche und produktschonende Weise die Auftrennung von fluiden Systemen und die Abtrennung von Bestandteilen aus Fluiden, beispielsweise im Bereich der Milchwirtschaft, der Biotechnologie und ähnlicher Prozesse. Die sich ergebenden neuen Produkte z.B. aus Molke sind Brotaufstriche, pudding- bzw. joghurtähnliche Speisen, Grundstoffe für Käseherstellung und dergleichen. Bei direkter Anwendung z.B. auf Milch läßt sich der Fettgehalt einstellen. Darüber hinaus ergeben sich Anwendungsbereiche bei der Obstsaftkonzentration, der Wasserentsalzung, der Fruchtwasseraufkonzentration bei der Kartoffelstärkeherstellung einschließlich Trocknung als Konzentrat und dergleichen.

## Patentansprüche

1. Verfahren zur schonenden Auftrennung von fluiden Systemen und schonenden Abtrennung von Inhaltsstoffen aus Fluiden durch Destillation, welche unter Anlegen eines Vakuums erfolgt und wobei ein durch Vakuum beaufschlagbares Volumen zur Durchführung der Destillation/Rektifikation nur teilweise mit Fluid gefüllt wird.

2. Verfahren nach Anspruch 1, dadurch gekennzeichnet, daß während des Destillationsvorganges das Vakuum variiert wird.

3. Verfahren nach Anspruch 1 und 2, dadurch gekennzeichnet, daß der Destillationsvorgang und die Entnahme der Produktströme kontinuierlich erfolgen.

4. Verfahren nach einem der vorhergehenden Ansprüche, dadurch gekennzeichnet, daß dieses auf wäßrige Systeme angewendet wird.

5. Verfahren nach einem der vorhergehenden Ansprüche, dadurch gekennzeichnet, daß eine Vorrichtung zur mechanischen Destabilisierung/Zerstörung eines sich evtl. bildenden Schaumes oberhalb des Flüssigkeitsspiegels des Verdampfungsraumes angebracht ist.

6. Verfahren nach einem der vorhergehenden Ansprüche, dadurch gekennzeichnet, daß dieses zur Erzeugung eines fließfähigen Konzentrates angewandt wird.

7. Verfahren nach einem der vorhergehenden Ansprüche, dadurch gekennzeichnet, daß dieses zur Trennung von fluiden Vielstoffgemischen eingesetzt werden kann, wobei die Einzelfraktionen in hoher Reinheit gewonnen werden können.

8. Verfahren nach einem der vorhergehenden Ansprüche, dadurch gekennzeichnet, daß dieses zur Entwässerung bzw. zur Abtrennung der leichter flüchtigen Komponenten in einem Bereich > 80 % angewandt wird.

9. Verfahren nach einem der vorhergehenden Ansprüche, dadurch gekennzeichnet, daß die edukt- und produktberührten Teile den Hygienevorschriften im Bereich der Lebensmittelindustrie entsprechen, und insbesondere leicht zu reinigen sind.

10. Verfahren nach einem der vorhergehenden Ansprüche, dadurch gekennzeichnet, daß dieses im Bereich der Lebensmitteltechnologie angewandt wird.

11. Verfahren nach Anspruch 10, dadurch gekennzeichnet, daß die Anwendung in der Milchwirtschaft erfolgt.

12. Verfahren nach einem der Ansprüche 10 oder 11, dadurch gekennzeichnet, daß dieses im Bereich der Käseherstellung angewendet wird.

13. Verfahren nach einem der Ansprüche 10, 11 oder 12, dadurch gekennzeichnet, daß dieses im Bereich der Kartoffelstärkeherstellung angewandt wird.

14. Verfahren nach einem der vorhergehenden Ansprüche, dadurch gekennzeichnet, daß dieses auf biologische Systeme angewendet wird.

15. Verfahren nach Anspruch 14, dadurch gekennzeichnet, daß dieses zur Biomassenkonzentration angewendet wird.

16. Verfahren nach einem der vorhergehenden Ansprüche, dadurch gekennzeichnet, daß dieses zur Abwasserbehandlung angewendet wird.

17. Verfahren nach einem der vorhergehenden Ansprüche, dadurch gekennzeichnet, daß dieses auf Laborarbeiten, vorzugsweise zur Aufbereitung von fluiden Systemen vor dem abschließenden Analysengang angewendet wird.

18. Verfahren nach einem der vorhergehenden Ansprüche, dadurch gekennzeichnet, daß dieses unter Verwendung von quasi-einstufigen und kontinuierlich arbeitenden Niedertemperatur-/Niederdruck-Destillations-/Rektifikationsanlagen mit einem Leistungsvermögen von 40 bis 500 l/h durchgeführt wird.

19. Verfahren nach einem der vorhergehenden Ansprüche, dadurch gekennzeichnet, daß der Wiedereinsatz des Molkekonzentrates zur Herstellung von Käse möglich ist.

20. Verfahren nach einem der vorhergehenden Ansprüche, dadurch gekennzeichnet, daß neue Produkte aus bekannten Ausgangsmedien hergestellt werden können.

21. Verfahren nach einem der vorhergehenden Ansprüche, dadurch gekennzeichnet, daß die Produkte mittels einer integrierten Sterilisationseinheit behandelt werden können.
